**Europäisches Patentamt**

**European Patent Office**

**Office européen des brevets**

(11) Veröffentlichungsnummer: **0 166 126**
A2

# (12) EUROPÄISCHE PATENTANMELDUNG

(21) Anmeldenummer: 85105403.1

(22) Anmeldetag: 03.05.85

(51) Int. Cl.⁴: **B 29 C 43/56,** B 29 C 67/14, B 32 B 27/00, B 32 B 31/20

(30) Priorität: 23.05.84 DE 3419142

(43) Veröffentlichungstag der Anmeldung: 02.01.86 Patentblatt 86/1

(84) Benannte Vertragsstaaten: **DE FR GB IT**

(71) Anmelder: **DORNIER SYSTEM GmbH, Postfach 1360, D-7990 Friedrichshafen (DE)**

(72) Erfinder: **Schröder, Hans-Wolfgang, Dr., Kupferbergstrasse 27, D-7997 Immenstaad (DE)**

(74) Vertreter: **Landsmann, Ralf, Dipl.-Ing., Kleeweg 3, D-7990 Friedrichshafen 1 (DE)**

(54) **Pressverfahren.**

(57) Verfahren zur Herstellung von Formkörpern aus faserverstärkten Kunststoffen durch Pressen nach der Deutschen Anmeldung P 3 404 679, wobei der zur Herstellung des Verbundes von Kunststoff (1, 3) und Fasern (2) benötigte Druck durch die thermische Expansion des Kunststoffes (1, 3) selbst erzeugt wird.

0166126

DORNIER SYSTEM GMBH

7990 Friedrichshafen


Reg. S 476 EU



Preßverfahren


Die Erfindung betrifft ein Verfahren zur Herstellung von Formkörpern aus faserverstärkten Kunststoffen durch Pressen, wobei zur Druckerzeugung und/oder Druckübertragung hochviskose Kunststoffschmelzen verwendet werden.


In der deutschen Patentanmeldung P 34 04 679 ist ein Verfahren zur Herstellung von Formkörpern aus faserverstärkten Kunststoffen durch Pressen vorgeschlagen, bei dem zur Druckerzeugung und/oder Druckübertragung hochviskose Kunststoffschmelzen verwendet werden. Insbesondere werden separate Druckerzeugungsstücke verwendet.


Der Erfindung liegt die Aufgabe zugrunde, die in der P 34 04 679 angegebenen Verfahren weiter auszubilden.


Diese Aufgabe wird erfindungsgemäss dadurch gelöst, dass der zur Herstellung des Verbundes von Kunststoff und Fasern benötigte Druck durch die thermische Expansion des Kunststoffes selbst erzeugt wird.

Verfahren zur Herstellung mehrschichtiger Formkörper und
Materialien, die sich dafür eignen, sind Gegenstände von
Unteransprüchen.

Erfindungsgemäss kann auf Druckstücke verzichtet werden,
wenn der Kunststoff selbst die notwendige thermoexpansive
Kraft aufbringen kann. Die Anwendung des Verfahrens ist durch
diese Maßnahme vereinfacht.

Die Erfindung eignet sich besonders für Werkstoffe oder Formkörper, wie sie in der P 34 10 501 vorgeschlagen sind.

Die Erfindung wird anhand zweier Figuren näher erläutert.

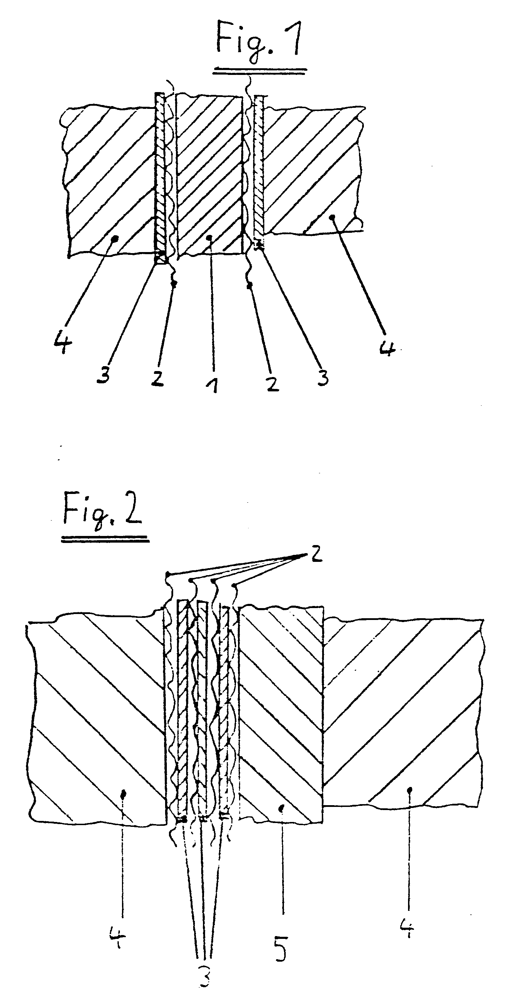

Die Figuren 1 und 2 zeigen Vorrichtungen zur Durchführung
des erfindungsgemässen Verfahrens.

Die Figur 1 zeigt einen zu verpressenden Aufbau zur Herstellung eines A-Sandwiches (aussen: harter, faserverstärkter
Kunststoff; innen: weicher Kern), bestehend aus einem Kern 1
aus ultrahochmolekularem Polyethylen, aus zwei Fasergewebelagen 2 und zwei Folien 3 aus ultrahochmolekularem Polyethylen
zwischen den Wänden 4 einer Preßform. Beim Erwärmen auf die
Verarbeitungstemperatur von ca. 180° C dehnt sich das Polyethylen im unbehinderten Fall um ca. 25 % aus. In dem Fall,
wie er hier dargestellt ist, kann sich das Polyethylen nur so
weit ausdehnen bis das Volumen zwischen den starren Wänden
ausgefüllt ist. Eine weitere Temperaturerhöhung führt dann zur Druckerhöhung und damit zur Infiltration des Gewebes 2. Durch geeignete Dimensionierung des Abstandes der Wände 4 kann der Druck den Bedürfnissen entsprechend eingestellt werden.

Mit den Verfahren lassen sich sehr hohe Drücke erreichen. Die Formen müssen gegebenenfalls entsprechend massiv gestaltet werden.

Die Figur 2 zeigt ein zweites Beispiel für die Herstellung eines faserverstärkten Verbundes von Kunststoff und Fasern durch thermische Expansion des Kunststoffes.

Die Figur 2 zeigt einen zu verpressenden Aufbau, bestehend aus einer Aussenschicht 5 aus kurzfaserverstärktem Polytetrafluorethylen, mehreren Fasergewebelagen 2 und mehreren Folien 3 aus Perfluoralkoxy-Copolymer (PFA) zwischen den Wänden 4 einer Pressform. Beim Erwärmen von Raumtemperatur auf die Verarbeitungstemperatur von ca. $360^{\circ}$ C dehnt sich das Polytetrafluorethylen im unbehinderten Fall um ca. 50 % aus und kann dadurch das Volumen zwischen den starren Wänden 4 ausfüllen und den zur Infiltration des Gewebes 2 nötigen Druck aufbauen.

Die kurzfaserverstärkte Aussenschicht 5 kann gegebenenfalls im ungesinterten Zustand eingesetzt werden, d.h. die Schicht kann aus einer kaltgepressten Mischung von PTFE Pulver und Kurzfasern bestehen. Die Sinterung würde dann zusammen mit der beschriebenen Herstellung des Verbundes von Fasern und Kunststoff erfolgen.

Reg. S 476 EU

P a t e n t a n s p r ü c h e :

1. Verfahren zur Herstellung von Formkörpern aus faserverstärkten Kunststoffen durch Pressen, wobei zur Druckerzeugung und/oder Druckübertragung hochviskose Kunststoffschmelzen verwendet werden, dadurch gekennzeichnet, daß der zur Herstellung des Verbundes von Kunststoff (1, 3) und Fasern (2) benötigte Druck durch die thermische Expansion des Kunststoffes (1, 3) selbst erzeugt wird.

2. Verfahren nach Anspruch 1, dadurch gekennzeichnet, dass als zu verstärkender Kunststoff Polytetraflourethylan verwendet wird.

3. Verfahren nach Anspruch 1, dadurch gekennzeichnet, dass als zu verstärkender Kunststoff ultrahochmolekulares Polyethylen verwendet wird.

4. Verfahren nach Anspruch 1, dadurch gekennzeichnet, dass als zu verstärkender Kunststoff Perfluoralkoxy-Copolymer (PFA) oder Fluorethylenpropylen-Copolymer (FEP) verwendet wird.

0166126

5. Verfahren nach einem der vorhergehenden Ansprüche, dadurch gekennzeichnet, dass mehrere Lagen verschiedener Kunststoffe in gleichen oder verschiedenen Dicken verwendet werden, wobei jedoch mindestens ein Kunststoff thermoexpansive Eigenschaften aufweist.

6. Verfahren nach Anspruch 1, dadurch gekennzeichnet, dass der herzustellende Formkörper aus mindestens zwei Schichten aufgebaut wird, wobei eine tragende Schicht aus faserverstärktem thermoplastischen Kunststoff und eine Aussenschicht aus einem Thermoplasten hoher Regenerosionsbeständigkeit vorgesehen sind.

7. Verfahren nach Anspruch 6, dadurch gekennzeichnet, dass für die tragende Schicht glas-, quarz-, keramik- oder aramidfaserverstärktes Polytetrafluorethylen (PTFE), PFA-Fluorkohlenstoff, FEP-Fluorkohlenstoff, Polyphenylensulfid, Polyamid, Polysulfon, Polyethersulfon, Polyethylen (PE), Polypropylen (PP) oder Polybuten (PB) verwendet wird und dass für die regenerosionsbeständige Aussenschicht Polyethylen (PE), bevorzugt ultrahochmolekulares Polyethylen (UHMPE), verwendet wird.

8. Verfahren nach Anspruch 6, dadurch gekennzeichnet, dass für die regenerosionsbeständige Aussenschicht vernetztes Polyethylen verwendet wird.

9. Verfahren nach Anspruch 6, dadurch gekennzeichnet, dass für die regenerosionsbeständige Aussenschicht Polyetheretherketon oder Polyethersulfon verwendet wird.

10. Verfahren nach einem der Ansprüche 6 bis 9, dadurch gekennzeichnet, dass für die tragende Schicht ein Sandwich-Aufbau verwendet wird, wobei die Aussenschichten aus faserverstärkten Thermoplasten bestehen und das Kernmaterial eine geringere Dichte und eine geringere Dielektrizitätskonstante besitzt.

11. Verfahren nach Anspruch 10, dadurch gekennzeichnet, dass für den Kern des tragenden Sandwichaufbaus syntaktischer Schaum mit thermoplastischer Matrix verwendet wird, das heisst ein Verbund von thermoplastischer Matrix und darin verteilten Hohlkugeln (z.B. aus Glas, Quarz oder duroplastischem Kunststoff).

12. Verfahren nach Anspruch 10, dadurch gekennzeichnet, dass für den Kern des tragenden Sandwichaufbaus ein unverstärkter Thermoplast verwendet wird wie z.B. UHMPE, PE, PB, PP, PTFE, PFA oder FEP.

13. Verfahren nach Anspruch 6, dadurch gekennzeichnet, dass in der tragenden Schicht endlosfaserverstärkte fluorhaltige Polymerisate (z.B. PTFE, FEP, PFA) verwendet werden und in der Aussenschicht ein Kunststoff der gleichen Polymerklasse enthalten ist, wobei die Regenerosionsbeständigkeit der Aussenschicht durch Verstärkungsmaterialien wie Kurzfasern sowie Glas- bzw. Keramikmehl bzw. -plättchen und durch Orientierung dieser Verstärkungsmaterialien gegenüber den unverstärkten fluorhaltigen Polymerisaten in Richtung der einfallenden Tropfen erhöht wird.

Fig. 1

Fig. 2